# FASCICULE DE BREVET EUROPEEN

(11) **EP 2 601 427 B1**
(45) Date de publication et mention de la délivrance du brevet: **20.05.2020**
(21) Numéro de dépôt: 11728340.8
(22) Date de dépôt: 31.05.2011
(51) Int. Cl.: F16H 61/12, F16H 61/02, F16H 61/16, F16H 63/46

(54) **PROCEDE DE RECONNAISSANCE ET DE GESTION DES RAPPORTS INDISPONIBLES D'UNE BOITE DE VITESSE AUTOMATIQUE ET SYSTEME ASSOCIE**
VERFAHREN ZUR ERKENNUNG UND HANDHABUNG VON UNVERFÜGBAREN GETRIEBEÜBERSETZUNGEN EINES AUTOMATIKGETRIEBES UND ZUGEHÖRIGES SYSTEM
METHOD FOR RECOGNIZING AND MANAGING THE UNAVAILABLE GEAR RATIOS OF AN AUTOMATIC GEARBOX, AND ASSOCIATED SYSTEM

(30) Priorité: 05.08.2010 FR 1056455
(43) Date de publication de la demande: 12.06.2013
(73) Titulaire: Renault S.A.S., 92100 Boulogne-Billancourt (FR)
(72) Inventeur: PLANCHE, Grégory, F-91400 Orsay (FR); VANDEKERKHOVE, Rémi, F-75012 Paris (FR)
(86) Numéro de dépôt international: PCT/FR2011/051249
(87) Numéro de publication internationale: WO 2012/017146

(56) Documents cités:
- EP-A1- 0 595 518
- EP-A1- 1 070 881
- EP-A2- 0 310 275
- FR-A1- 2 813 564

## Description

L'invention concerne d'une manière générale la commande des rapports de transmission d'un véhicule automobile équipé d'une boîte de vitesse automatique, et plus particulièrement, la reconnaissance et la gestion des rapports indisponibles, tel que connu de EP 0 595 518 divulguant tous les caractéristiques du préambule des revendications 1 et 9.

Une des particularités d'une boîte de transmission automatisée à deux arbres d'entrées et deux embrayages d'un véhicule automobile est que les actionneurs sont tous électriques et que, par conception, il existe une concurrence plus élevée de perdre un rapport, que sur d'autres types de transmission. Mais ce problème apparaît aussi sur les autres types de transmission.

Ces interdictions de rapport de transmission peuvent apparaître et disparaître fugitivement en cours de roulage et sont susceptibles de concerner un ou plusieurs rapports.

Selon cette hypothèse, lorsque les lois de passage réalisent une demande de rapport avec toutes les conditions nécessaires pour que celle-ci soit acceptée, il est possible que le rapport préconisé ne soit plus disponible.

Selon un mode de réalisation et de mise en œuvre, il est proposé un procédé de reconnaissance et de gestions des rapports indisponibles permettant de proposer au conducteur le meilleur choix possible de rapport en fonction de la demande initiale de rapport, des conditions de roulage et de la connaissance de l'ensemble des rapports indisponibles, et s'appliquant à tous les types de transmissions automatiques en mode manuel ou automatique.

Selon un aspect, il est proposé, dans un mode de mise en œuvre, un procédé de commande des rapports de transmission d'un véhicule automobile équipé d'une boîte de vitesse automatique, comprenant une réception d'une consigne de rapport de transmission demandé.

Selon une caractéristique générale, le procédé comprend une réception d'informations relatives aux rapports de transmission indisponibles, et une détermination du rapport de transmission à appliquer tenant compte des rapports de transmission indisponibles.

Le rapport de transmission à appliquer est entre autre déterminé en fonction du choix initial des lois de passage, des rapports de transmission indisponibles, des seuils de régime d'autorisation de changement de rapport et des vitesses d'arbres primaires prévisionnels pour chaque rapport, avant d'appliquer le rapport de transmission ainsi calculé.

De préférence, le procédé comprend une vérification de la disponibilité du rapport de transmission demandé. Si le rapport de transmission demandé est disponible, le rapport de transmission à appliquer correspondant alors à la consigne de rapport de transmission demandé.

Le procédé comprend un premier calcul du premier rapport montant disponible, et un second calcul du premier rapport rétrograde disponible. Le premier rapport montant disponible correspond au premier rapport de transmission montant disponible suivant le rapport de transmission demandé. Le même raisonnement s'applique pour le premier rapport rétrograde disponible.

Dans le cas où aucun rapport rétrograde n'est disponible, le rapport de transmission à appliquer correspond au premier rapport montant suivant disponible.

Dans une telle configuration, l'embrayage réalise alors un glissement lors de l'application du premier rapport montant suivant disponible si la vitesse prévisionnelle de l'arbre primaire correspondant au premier rapport montant disponible est inférieure à un seuil de ralenti.

En revanche, s'il existe un rapport rétrograde, le rapport de transmission à appliquer correspond au premier rapport rétrograde. Ceci, à condition que le régime de l'arbre primaire prévisionnel correspondant au premier rapport rétrograde soit inférieur à un seuil de forçage de rapport montant.

Dans le cas contraire, c'est-à-dire si le régime de l'arbre primaire prévisionnel correspondant au premier rapport rétrograde est supérieur audit seuil de forçage de rapport montant, le rapport de transmission à appliquer correspond au premier rapport montant. Le premier rapport ne sera appliqué que si le régime prévisionnel du premier rapport montant disponible est supérieur à un seuil d'autorisation de passage au rapport montant.

En effet, si, au contraire, le régime prévisionnel du premier rapport montant disponible est inférieur à un seuil d'autorisation de passage au rapport montant, ou bien si aucun rapport montant n'est disponible, le rapport de transmission à appliquer correspond au premier rapport rétrograde à condition que le régime prévisionnel du premier rapport rétrograde soit inférieur à un régime statique acceptable correspondant au régime maximal que peut supporter l'arbre primaire.

Ce régime statique acceptable correspond à un seuil de vitesse au-dessus duquel l'arbre risque de rompre.

Si le régime prévisionnel du premier rapport rétrograde est supérieur au régime statique acceptable et que le rapport de transmission appliqué avant la consigne de rapport de transmission demandé correspond au premier rapport rétrograde disponible, le rapport de transmission à appliquer correspond au premier rapport rétrograde. Cette possibilité permet ainsi de ne pas changer de rapport de transmission, si aucune autre possibilité n'est possible, évitant ainsi de débrayer.

Si le rapport de transmission demandé n'est pas disponible et si aucun rapport montant ou rétrograde n'est disponible, le rapport de transmission à appliquer est nul, ce qui correspond à une demande de débrayage, ou passage au neutre.

Enfin, dans un autre mode de mise en oeuvre, le basculement du premier rapport montant disponible au premier rapport rétrograde disponible est autorisé seulement si la vitesse du véhicule est inférieure à un seuil de vitesse du véhicule et que l'accélérateur est relevé, le rapport de transmission à appliquer étant nul si les moyens mesure de la vitesse du véhicule sont en défaut sauf si le mode manuel est enclenché et qu'il y a un rapport de transmission engagé, dans lequel cas le rapport de transmission à appliquer correspond au rapport de transmission demandé.

Selon un autre aspect, il est proposé, dans un mode de réalisation, un système de commande des rapports de transmission d'un véhicule automobile équipé d'une boîte de vitesse automatique.

Selon une caractéristique générale, le système comprend un premier module de réception aptes à recevoir une consigne de rapport de transmission demandé, un second module de réception aptes à recevoir des informations relatives aux rapports de transmission indisponibles, et des moyens de détermination du rapport de transmission à appliquer aptes à calculer le rapport de transmission à appliquer en fonction des rapports de transmission indisponibles.

Avantageusement, le système peut comprendre des moyens de traitement aptes à vérifier la disponibilité du rapport de transmission demandé et à déterminer l'ensemble des rapports indisponibles.

Le système comprend également des premiers moyens de calculs aptes à calculer le premier rapport montant disponible, et des seconds moyens de calculs aptes à calculer le premier rapport rétrograde disponible.

Les moyens de détermination du rapport de transmission à appliquer comprennent un premier module de comparaison apte à comparer le régime de l'arbre primaire prévisionnel correspondant au premier rapport rétrograde à un seuil de forçage de rapport montant, un second module de comparaison apte à comparer le régime prévisionnel du premier rapport montant disponible à un seuil d'autorisation de passage au rapport montant, un troisième module de comparaison apte à comparer le régime prévisionnel du premier rapport rétrograde à un régime statique acceptable correspondant au régime maximal que peut supporter l'arbre primaire.

Le système comprend aussi un quatrième module de comparaison apte à comparer le régime prévisionnel de l'arbre primaire correspondant au premier rapport montant disponible à un seuil de ralenti.

D'autres avantages et caractéristiques de l'invention apparaîtront à l'examen de la description détaillée de modes de mise en œuvre et de modes de réalisation, nullement limitatifs, et des dessins annexés, sur lesquels :
- la figure 1 présente un organigramme d'un procédé de commande des rapports de transmission selon un mode de mise en œuvre de l'invention ;
- la figure 2 illustre un système de commande des rapports de transmission selon un mode de réalisation de l'invention ;
- la figure 3 représente un exemple de réalisation de moyens de détermination d'un système de commande des rapports de transmission selon un mode de réalisation de l'invention.

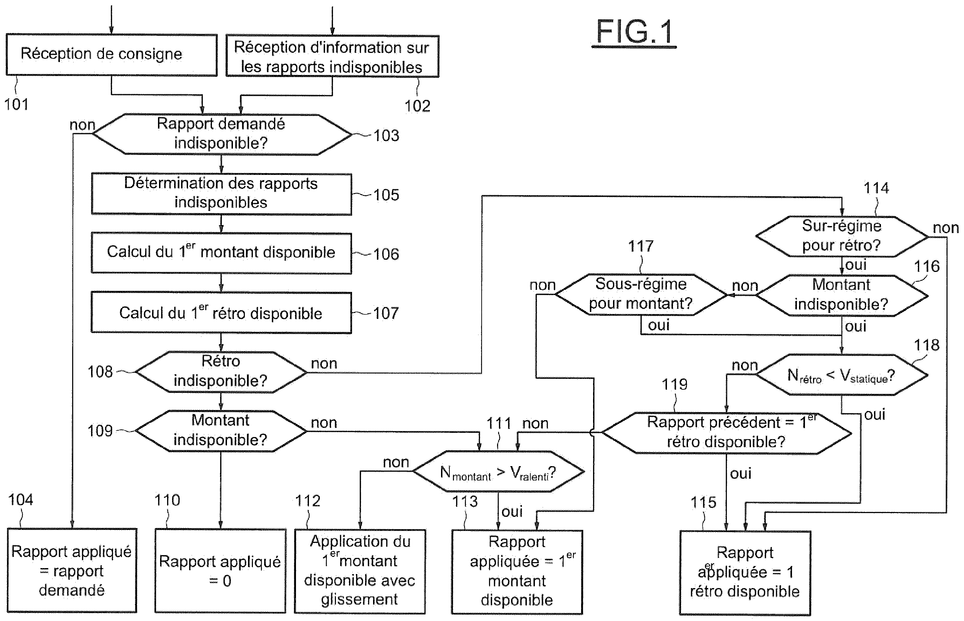

La figure 1 représente un exemple d'organigramme d'un procédé de commande des rapports de transmission tenant compte des rapports de transmission indisponibles, selon un mode de réalisation.

Dans une première et une seconde étapes 101 et 102, on reçoit respectivement une consigne de rapport de transmission demandé et des informations relatives aux rapports de transmission indisponibles. Ce procédé peut s'appliquer à tous les types de transmissions automatiques en mode manuel ou automatique dès lors qu'il reçoit des informations relatives aux rapports de transmission indisponibles dans la boîte de transmission.

Dans une étape suivante 103, on vérifie à partir de la consigne de rapport de transmission de l'indisponibilité du rapport demandé et des informations relatives aux rapports de transmission indisponibles, si le rapport demandé est indisponible.

Si celui-ci est disponible, on applique alors dans une étape suivante 104, le rapport demandé.

En revanche, si le rapport demandé se trouve être indisponible, on détermine dans l'étape suivante 105 tous les rapports indisponibles, et on calcule respectivement dans les deux étapes suivantes 106 et 107, le premier rapport montant disponible et le premier rapport rétrograde disponible. On entend par premier rapport montant disponible, le premier rapport de transmission disponible supérieur au rapport de transmission demandé. Respectivement, on entend par premier rapport rétrograde disponible, le premier rapport de transmission disponible inférieur au rapport de transmission demandé.

Dans une étape suivante 108, on détermine si tous les rapports rétrogrades sont indisponibles.

Si aucun rapport n'est disponible, on détermine alors dans une étape suivante 109 si tous les rapports montants sont indisponibles. Si aucun rapport montant n'est disponible non plus, alors, dans une étape suivante 110, on applique comme rapport de transmission à appliquer un rapport de transmission nul, c'est-à-dire qu'on débraye, ce qui équivaut à un passage au neutre.

Si, en revanche, à l'issue de l'étape 109, il est déterminé qu'il existe un premier rapport de transmission montant disponible, on vérifie dans une autre étape 111, avant d'effectuer le passage au premier rapport montant disponible, si les conditions de vitesse sont vérifiées pour ce passage montant. Pour cela, on compare le régime de l'arbre primaire estimé pour le premier rapport de transmission montant, *Nₘₒₙₜₐₙₜ*, c'est-à-dire la vitesse de rotation de l'arbre primaire pour ce rapport de transmission montant, à un seuil de vitesse de ralenti, *Vᵣₐₗₑₙₜᵢ,* qui correspond à la valeur minimale que doit valoir le régime de l'arbre primaire estimé pour l'arbre le premier rapport montant disponible pour éviter que le moteur du véhicule automobile ne cale lors du passage au premier rapport montant disponible.

Si le régime de l'arbre primaire estimé pour le premier rapport de transmission montant, *V_{arbre_primaire},* est inférieur au seuil de vitesse de ralenti, *Vᵣₐₗₑₙₜᵢ,* alors le rapport de transmission à appliquer correspond, dans une étape 113, au premier rapport montant disponible.

Si, par contre, le régime de l'arbre primaire estimé pour le premier rapport de transmission montant, *V_{arbre_primaire},* est supérieur au seuil de vitesse de ralenti, *Vᵣₐₗₑₙₜᵢ,* le rapport de transmission à appliquer correspond, dans une étape 112, au premier rapport montant disponible, mais ce premier rapport montant disponible sera appliqué avec un glissement, c'est-à-dire que l'embrayage glissera lors de l'application du rapport de transmission afin d'éviter le calage du moteur. Ce choix de rapport de transmission reste meilleur qu'un arrêt total du véhicule automobile dans un tel cas.

En revanche, si, à l'étape 108, on détermine qu'un premier rapport rétrograde est disponible, on évalue alors, dans une étape suivante 114, si le véhicule est susceptible de se trouver en surrégime si ce premier rapport rétrograde disponible est appliqué. Pour cela, on compare le régime de l'arbre primaire prévisionnel correspondant à ce premier rapport rétrograde disponible, *N_{rétro},* à un seuil de forçage montant, *Surrégime.*

Si le régime de l'arbre primaire prévisionnel correspondant à ce premier rapport rétrograde disponible, *N_{rétro},* est inférieur au seuil de forçage montant, *Surrégime,* cela signifie que le véhicule ne se trouverait pas en surrégime si ce premier rapport rétrograde disponible était appliqué. Dans ce cas, le rapport de transmission à appliquer, correspond, dans une étape 115, au premier rapport rétrograde disponible.

Si, au contraire, le régime de l'arbre primaire prévisionnel correspondant à ce premier rapport rétrograde disponible, *N_{rétro},* est supérieur au seuil de forçage montant, *Surrégime,* cela signifie que le véhicule se trouverait en surrégime si ce premier rapport rétrograde disponible était appliqué. Dans ce cas, on détermine, dans une étape suivante 116, si tous les rapports de transmission montants sont indisponibles.

Si aucun des rapports montants n'est disponible, un nouvel essai de passage au premier rapport rétrograde disponible est réalisé. Pour cela, on vérifie, dans une étape 118, que les conditions de vitesse sont respectées pour le premier rapport rétrograde disponible. Dans ce but, on compare le régime, c'est-à-dire la vitesse de rotation, de l'arbre primaire estimé pour le premier rapport rétrograde disponible, *N_{rétro},* à la vitesse statique acceptable, *V_{statique},* qui correspond à la vitesse de rotation maximale que peut supporter l'arbre primaire sans subir aucun dommage.

Si le régime de l'arbre primaire estimé pour le premier rapport rétrograde disponible, *N_{rétro}*, est inférieur à la vitesse statique acceptable, *V_{statique},* l'arbre primaire ne risquant aucun dommage, le rapport appliqué dans l'étape 115 correspond au premier rapport rétrograde disponible.

En revanche, si, à l'étape 116, un rapport montant se trouve être disponible, on évalue alors, dans une étape suivante 117, si le véhicule est susceptible de se trouver en sous régime si ce premier rapport montant disponible est appliqué. Pour cela, on compare le régime de l'arbre primaire prévisionnel correspondant à ce premier rapport montant disponible, *Nₘₒₙₜₐₙₜ*, au seuil d'autorisation de passage au rapport montant, *Sousrégime.*

Si le régime de l'arbre primaire prévisionnel correspondant à ce premier rapport montant disponible, *Nₘₒₙₜₐₙₜ*, est supérieur au seuil d'autorisation de passage au rapport montant, *Sousrégime,* cela signifie que le véhicule ne se trouverait pas en sous régime si ce premier rapport montant disponible était appliqué. Dans ce cas, le rapport de transmission à appliquer, correspond, dans l'étape 113, au premier rapport montant disponible.

Si, au contraire, le régime de l'arbre primaire prévisionnel correspondant à ce premier rapport montant disponible, *Nₘₒₙₜₐₙₜ*, est inférieur au seuil d'autorisation de passage au rapport montant, *Sousrégime,* cela signifie que le véhicule se trouverait en sous régime si ce premier rapport montant disponible était appliqué. Dans ce cas, on réalise l'étape 118 déjà explicitée précédemment, dans laquelle on effectue un nouvel essai de passage au premier rapport rétrograde disponible.

Dans le cas où, dans l'étape 118, le régime de l'arbre primaire estimé pour le premier rapport rétrograde disponible, *N_{rétro}*, est supérieur à la vitesse statique acceptable, *V_{statique},* le passage au premier rapport rétrograde disponible pourrait comporter des risques pour l'arbre primaire.

On détermine alors, dans une étape suivante 119, si le rapport de transmission engagé avant la réception de la consigne de rapport de transmission demandé correspond au premier rapport rétrograde disponible. Cette situation peut se présenter si la consigne de rapport de transmission demandé correspond au premier rapport montant par rapport au rapport engagé avant la demande de changement de rapport.

Si tel est le cas, c'est-à-dire si le rapport de transmission engagé avant la réception de la consigne de rapport de transmission demandé correspond au premier rapport rétrograde disponible, alors, dans l'étape 115, le rapport de transmission appliqué se trouve être le premier rapport rétrograde disponible. Ceci est acceptable, car cela correspond à un maintient dans le rapport de transmission précédemment engagé, et les risques d'endommagement de l'arbre primaire sont moindres que si un autre rapport de transmission était engagé. Et cette solution est préférable à un arrêt du véhicule.

Si, au contraire, à l'étape 119, le rapport de transmission engagé avant la réception de la consigne de rapport de transmission demandé ne correspond pas au premier rapport rétrograde disponible, on retourne à l'étape 111, dans on vérifie, avant d'effectuer le passage au premier rapport montant disponible, si les conditions de vitesse sont vérifiées pour ce passage montant.

Ainsi, le rapport de transmission à appliquer correspondra, dans une étape 113, au premier rapport montant disponible si le régime de l'arbre primaire estimé pour le premier rapport de transmission montant, *V_{arbre_primaire},* est inférieur au seuil de vitesse de ralenti, *Vᵣₐₗₑₙₜᵢ*.

Et, au contraire, le rapport de transmission à appliquer correspondra, dans une étape 112, au premier rapport montant disponible appliqué avec un glissement si le régime de l'arbre primaire estimé pour le premier rapport de transmission montant, *V_{arbre_primaire,}* est supérieur au seuil de vitesse de ralenti, *Vᵣₐₗₑₙₜᵢ.*

Dans un autre mode de mise en oeuvre, une condition supplémentaire peut être ajoutée pour éviter un basculement systématique entre le premier rapport rétrograde disponible engagé à l'étape 115 à l'issue de l'étape 114, et le premier rapport montant disponible engagé à l'étape 113 à l'issue des étapes 116 et 117. Ce basculement est dû au fait que le rapport rétrograde devient disponible dès que le régime est inférieur au seuil de forçage montant, *Surrégime,* c'est-à-dire dès que le régime prévisionnel de l'arbre primaire correspondant au premier rapport rétrograde disponible est inférieur à ce seuil.

Cette condition supplémentaire autorise le basculement seulement si la vitesse du véhicule tombe en dessous du seuil de vitesse du véhicule pour autoriser une demande de rapport rétrograde avec le pied de l'accélérateur relevé. Ceci permet de répondre à une demande de décélération de la part du conducteur en autorisant le passage au rapport de transmission rétrograde une fois toutes les conditions vérifiées.

S'il n'y a pas de moyens mesure de la vitesse du véhicule, c'est-à-dire si les capteurs de vitesses ont été mis en défaut, le rapport de transmission à appliquer ne peut pas être déterminé. Dans ces conditions, le rapport de transmission à appliquer est nul, sauf si le mode manuel est enclenché et qu'il y a un rapport de transmission engagé. En effet, dans ce dernier cas, le rapport de transmission à appliquer correspondra directement à la requête du conducteur sans traitement supplémentaire.

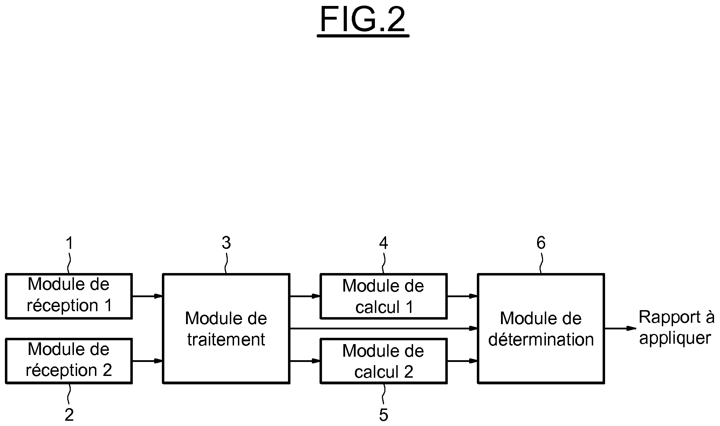

La figure 2 présente un exemple de système de commande des rapports de transmission d'un véhicule automobile équipé d'une boîte de vitesse automatique, selon un mode de réalisation de l'invention. Ce système comprend un premier module de réception 1 permettant de recevoir la consigne de rapport de transmission demandé, ainsi qu'un second module de réception 2 permettant de recevoir des informations relatives aux rapports de transmission indisponibles.

Ces informations reçues par les deux modules de réception 1 et 2 sont délivrées ensuite à des moyens de traitement 3 aptes, d'une part, à vérifier la disponibilité du rapport de transmission demandé et, d'autre part, à déterminer l'ensemble des rapports indisponibles à partir des informations reçues.

Le système comprend également des premiers moyens de calculs 4 aptes à calculer le premier rapport montant disponible à partir des informations délivrées par les moyens de traitement 3, et des seconds moyens de calculs 5 aptes à calculer le premier rapport rétrograde disponible également à partir des informations délivrées par les moyens de traitement 3.

Enfin, le système comprend des moyens de détermination 6 auxquels sont délivrés premièrement, par les moyens de traitement 3, les informations relatives à la disponibilité du rapport de transmission et les informations relatives à tous les rapports de transmission indisponibles, deuxièmement, par le premier module de calcul 4, le premier rapport montant disponible, et troisièmement, par le second module de calcul 5, le premier rapport rétrograde disponible.

Ces moyens de détermination 6 détermine alors le rapport de transmission à appliquer à partir de ces informations complétées de la vitesse du véhicule, du seuil de vitesse de l'arbre primaire d'autorisation de rétro, du seuil de vitesse sur l'arbre primaire d'autorisation de montant, du seuil de vitesse sur l'arbre primaire d'autorisation de forçage montant, des vitesses prévisionnelles d'arbre primaire pour chaque rapport, des seuils en vitesse du véhicule pour chaque demande de rapport rétrograde avec le pied de l'accélérateur relevé, du régime statique maximum acceptable, des variables signalant un défaut dans la détermination de la vitesse du véhicule ou des vitesses des arbres primaires, et de la variable signalant si le mode manuel est engagé.

Dans le cas où les moyens de traitement 3 vérifient bien que le rapport de transmission demandé est disponible, un signal est envoyé aux premier second moyens de calcul 4 et 5 afin de ne pas activer ces deux modules 4 et 5.

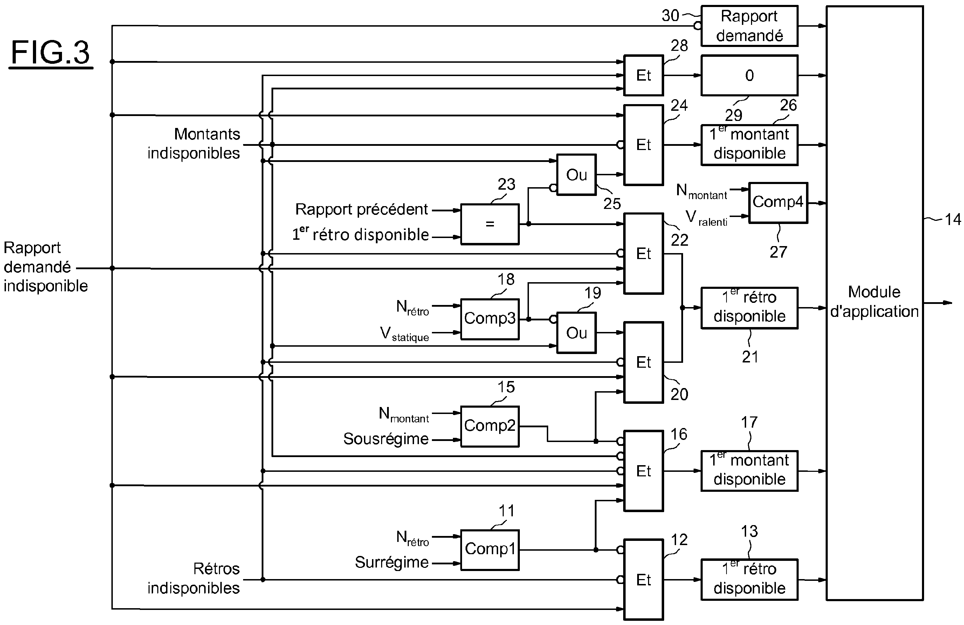

La figure 3 représente un exemple de réalisation de moyens de détermination 6 d'un système de commande des rapports de transmission d'une boîte de vitesse automatique d'un véhicule automobile, selon un mode de réalisation de l'invention.

Les moyens de détermination 6 du rapport de transmission à appliquer comprennent un premier module de comparaison 11 apte à comparer le régime de l'arbre primaire prévisionnel correspondant au premier rapport rétrograde, *N_{rétro}*, à un seuil de forçage de rapport montant, *Surrégime.* Si le régime de l'arbre primaire prévisionnel correspondant au premier rapport rétrograde, *N_{rétro}*, est supérieur au seuil de forçage de rapport montant, *Surrégime,* c'est-à-dire si le véhicule est susceptible d'être en surrégime lorsque le premier rapport rétrograde est engagé, le premier module de comparaison 11 délivre en sortie un signal booléen non nul.

Ce signal est reçu à une entrée inverseuse d'un premier module logique ET 12 qui reçoit également sur une deuxième entrée inverseuse un signal booléen relatif à l'indisponibilité de tous les rapports rétrogrades, et sur une entrée non inverseuse un signal booléen relatif à l'indisponibilité du rapport de transmission demandé.

Le premier module logique ET 12 délivre en sortie un signal booléen résultant de la combinaison logique ET. Ce signal booléen sera donc non nul si, à la fois, le rapport de transmission demandé est indisponible, s'il existe un rapport de transmission rétrograde disponible et si le régime de l'arbre primaire prévisionnel correspondant au premier rapport rétrograde, *N_{rétro}*, est inférieur au seuil de forçage de rapport montant, *Surrégime.*

Si ces trois conditions sont vérifiées ensemble, le signal booléen délivré en sortie du premier module logique ET 12 à un premier module de rapport 13 est non nul. Ce module de rapport 13 délivre dans ce cas en sortie à un module d'application 14 un signal indiquant que le rapport de transmission à appliquer est le premier rapport rétrograde disponible.

En revanche, si le signal reçu en entrée par le premier module de rapport 13 est nul, il n'y a pas de signal de sortie délivré au module d'application 14.

Les moyens de détermination 6 comprennent également un second module de comparaison 15 apte à comparer le régime prévisionnel du premier rapport montant disponible, *Nₘₒₙₜₐₙₜ*, à un seuil d'autorisation de passage au rapport montant, *Sousrégime.* Si le régime de l'arbre primaire prévisionnel correspondant au premier rapport montant, *Nₘₒₙₜₐₙₜ*, est inférieur au seuil d'autorisation de passage au rapport montant, *Sousrégime,* c'est-à-dire si le véhicule est susceptible d'être en sous régime lorsque le premier rapport montant est engagé, le second module de comparaison 15 délivre en sortie un signal booléen non nul. Ce signal est reçu à une entrée inverseuse d'un second module logique ET 16.

Ce second module logique ET 16 reçoit sur une deuxième entrée inverseuse un signal booléen relatif à l'indisponibilité de tous les rapports montants, sur une troisième entrée inverseuse un signal booléen relatif à l'indisponibilité de tous les rapports rétrogrades, sur une première entrée non inverseuse un signal booléen relatif à l'indisponibilité du rapport de transmission demandé, et sur une deuxième entrée non inverseuse, le signal de sortie du premier module de comparaison 11.

Le second module logique ET 16 délivre en sortie un signal booléen résultant de la combinaison logique ET des signaux en entrée. Ce signal booléen sera donc non nul si, à la fois, le rapport de transmission demandé est indisponible, s'il existe un rapport de transmission rétrograde disponible, s'il existe un rapport de transmission montant disponible, si le régime de l'arbre primaire prévisionnel correspondant au premier rapport rétrograde, *N_{rétro}*, est supérieur au seuil de forçage de rapport montant, *Surrégime,* et si le régime de l'arbre primaire prévisionnel correspondant au premier rapport montant, *Nₘₒₙₜₐₙₜ*, est supérieur au seuil d'autorisation de passage au rapport montant, *Sousrégime.*

Si ces cinq conditions sont vérifiées ensemble, le signal booléen délivré en sortie du second module logique ET 16 à un second module de rapport 17 est non nul. Dans ce cas, ce module de rapport 17 délivre en sortie au module d'application 14 un signal indiquant que le rapport de transmission à appliquer est le premier rapport montant disponible.

En revanche, si le signal reçu en entrée par le second module de rapport 17 est nul, il n'y a pas de signal de sortie délivré au module d'application 14.

Les moyens de détermination 6 comprennent un troisième module de comparaison 18 apte à comparer le régime prévisionnel du premier rapport rétrograde, *N_{rétro}*, à un régime statique acceptable correspondant au régime maximal que peut supporter l'arbre primaire, *V_{statique},* qui correspond à la vitesse de rotation maximale que peut supporter l'arbre primaire sans subir aucun dommage. Si le régime prévisionnel de l'arbre primaire correspondant au premier rapport rétrograde, *N_{rétro}*, est inférieur au régime statique acceptable, *V_{statique},* le troisième module de comparaison 18 délivre en sortie un signal booléen non nul.

Ce signal est reçu à une entrée inverseuse d'un premier module logique OU 19 qui reçoit aussi à une entrée non inverseuse, le signal relatif à l'indisponibilité de tous les rapports de transmission montants. Ce premier module logique OU 19 délivre ainsi en sortie un signal booléen non nul si aucun rapport de transmission montant n'est disponible ou si le régime prévisionnel de l'arbre primaire correspondant au premier rapport rétrograde, *N_{rétro}*, est supérieur au régime statique acceptable, *V_{statique}.* Sinon, c'est-à-dire si, à la fois, il existe un rapport de transmission disponible et le régime prévisionnel de l'arbre primaire correspondant au premier rapport rétrograde, *N_{rétro}*, est inférieur au régime statique acceptable, *V_{statique},* le rapport délivré est nul.

Un troisième module logique ET 20 reçoit alors sur une première entrée non inverseuse le signal de sortie du premier module logique OU 19, sur une deuxième entrée non inverseuse un signal booléen relatif à l'indisponibilité du rapport de transmission demandé, sur une entrée inverseuse un signal booléen relatif à l'indisponibilité de tous les rapports rétrogrades, et sur une troisième entrée non inverseuse le signal booléen de sortie du second module de comparaison 15.

Le troisième module logique ET 20 délivre en sortie un signal booléen résultant de la combinaison logique ET des quatre signaux en entrée. Ce signal booléen sera donc non nul si, à la fois, le rapport de transmission demandé est indisponible, s'il existe un rapport de transmission rétrograde disponible, si tous les rapports de transmission montants sont indisponibles ou si le régime prévisionnel de l'arbre primaire correspondant au premier rapport rétrograde, *N_{rétro}*, est supérieur au régime statique acceptable, *V_{statique},* et si le régime de l'arbre primaire prévisionnel correspondant au premier rapport montant, *Nₘₒₙₜₐₙₜ*, est inférieur au seuil d'autorisation de passage au rapport montant, *Sousrégime.*

Si ces quatre conditions sont vérifiées ensemble, le troisième module logique ET 20 délivre un signal booléen non nul en sortie à un troisième module de rapport 21. Dans ce cas, ce troisième module de rapport 21 délivre en sortie au module d'application 14 un signal indiquant que le rapport de transmission à appliquer est le premier rapport rétrograde disponible.

En revanche, si le signal reçu en entrée par le troisième module de rapport 21 est nul, il n'y a pas de signal de sortie délivré au module d'application 14.

Les moyens de détermination 6 comprennent un quatrième module logique ET 22 recevant sur une première entrée non inverseuse un signal de sortie d'un module de test 23 apte à vérifier si le rapport de transmission engagé avant la réception de la consigne de rapport de transmission demandé correspond au premier rapport rétrograde disponible. Cette situation peut se présenter si la consigne de rapport de transmission demandé correspond au premier rapport montant par rapport au rapport engagé avant la demande de changement de rapport. Si la condition est vérifiée, le module de test 23 délivre en sortie un signal booléen non nul. Sinon, le signal de sortie est nul.

Ce quatrième module logique ET 22 reçoit également sur une deuxième entrée non inverseuse un signal booléen relatif à l'indisponibilité du rapport de transmission demandé, sur une entrée inverseuse un signal booléen relatif à l'indisponibilité de tous les rapports rétrogrades, et sur une troisième entrée non inverseuse le signal booléen de sortie du troisième module de comparaison 18.

Le quatrième module logique ET 22 délivre en sortie un signal booléen résultant de la combinaison logique ET des quatre signaux en entrée. Ce signal booléen sera donc non nul si, à la fois, le rapport de transmission demandé est indisponible, s'il existe un rapport de transmission rétrograde disponible, si le régime prévisionnel de l'arbre primaire correspondant au premier rapport rétrograde, *N_{rétro}*, est inférieur au régime statique acceptable, *V_{statique},* et si le rapport de transmission engagé avant la réception de la consigne de rapport de transmission demandé correspond au premier rapport rétrograde disponible.

Si ces quatre conditions sont vérifiées ensemble, le quatrième module logique ET 22 délivre un signal booléen non nul en sortie au troisième module de rapport 21. Dans ce cas, ce troisième module de rapport 21 délivre en sortie au module d'application 14 un signal indiquant que le rapport de transmission à appliquer est le premier rapport rétrograde disponible.

En revanche, si le signal reçu en entrée par le troisième module de rapport 21 est nul, il n'y a pas de signal de sortie délivré au module d'application 14.

Les moyens de détermination 6 comprennent un cinquième module logique ET 24 recevant sur une première entrée non inverseuse un signal de sortie d'un second module logique OU 25 recevant sur une entrée inverseuse le signal de sortie du module de test 23 et sur une entrée non inverseuse le signal relatif à l'indisponibilité de tous les rapports de transmission rétrograde. Le second module logique OU délivre en sortie un signal booléen non nul tous les rapports de transmission rétrograde sont indisponible ou bien si le rapport de transmission engagé avant la réception de la consigne de rapport de transmission demandé est différent du premier rapport rétrograde disponible. Sinon, le signal de sortie du second module logique OU 25 est nul.

Le cinquième module logique ET 24 reçoit également sur une sur une entrée inverseuse un signal booléen relatif à l'indisponibilité de tous les rapports de transmission montants, et sur une deuxième entrée non inverseuse un signal booléen relatif à l'indisponibilité du rapport de transmission demandé.

Le cinquième module logique ET 24 délivre en sortie un signal booléen résultant de la combinaison logique ET des cinq signaux en entrée. Ce signal booléen sera donc non nul si, à la fois, le rapport de transmission demandé est indisponible, s'il existe un rapport de transmission montant disponible, et s'il n'existe aucun rapport rétrograde disponible ou si le rapport de transmission engagé avant la réception de la consigne de rapport de transmission demandé est différent au premier rapport rétrograde disponible.

Si ces trois conditions sont vérifiées ensemble, le cinquième module logique ET 24 délivre un signal booléen non nul en sortie au quatrième module de rapport 26. Dans ce cas, ce quatrième module de rapport 26 délivre en sortie au module d'application 14 un signal indiquant que le rapport de transmission à appliquer est le premier rapport montant disponible.

En revanche, si le signal reçu en entrée par le quatrième module de rapport 26 est nul, il n'y a pas de signal de sortie délivré au module d'application 14.

Il est à noter que lorsque le second ou le quatrième modules de rapport 17 et 26 délivrent un signal au module d'application 14, celui prend en compte un signal d'entrée issu d'un quatrième module de comparaison 27. Ce quatrième module de comparaison 27 reçoit en entrée le régime, ou vitesse de rotation, de l'arbre primaire prévisionnel pour le premier rapport montant disponible, *Nₘₒₙₜₐₙₜ*, ainsi que le seuil de vitesse ralenti, *Vᵣₐₗₑₙₜᵢ.*

Ledit quatrième module de comparaison 27 délivre un signal booléen non nul en sortie si le régime prévisionnel de l'arbre primaire correspondant au premier rapport montant disponible est inférieur au seuil de vitesse de ralenti, *Vᵣₐₗₑₙₜᵢ.* Sinon, le rapport délivré est nul. Le signal booléen non nul délivré au module d'application 14, indique que le premier rapport montant disponible peut appliqué directement. Un signal de sortie du quatrième module de comparaison 27 nul indique en revanche au module de d'application 14 que le premier rapport montant disponible doit être appliqué avec un glissement.

Les moyens de détermination comprennent également un sixième module logique ET 28 recevant respectivement sur trois entrées non inverseuses le signal booléen relatif à l'indisponibilité du rapport de transmission demandé, le signal booléen relatif à l'indisponibilité de tous les rapports de transmission rétrogrades, le signal booléen relatif à l'indisponibilité de tous les rapports de transmission montants.

Le sixième module logique ET 28 délivre ainsi en sortie un signal booléen non nul si le rapport de transmission demandé n'est pas disponible et qu'aucun rapport montant ou rétrograde n'est disponible. Ce signal booléen est délivré à un cinquième module de rapport 29 qui délivre un signal de sortie au module d'application 14 indiquant que le rapport de transmission à appliquer est nul.

Si, en revanche, le signal de sortie du sixième module logique ET est nul, le cinquième module de rapport 29 ne délivre aucun signal de sortie.

Enfin, les moyens de détermination 6 comprennent un sixième module de rapport 30 recevant sur une entrée inverseuse le signal booléen relatif à l'indisponibilité du rapport de transmission demandé. Si le rapport de transmission demandé est disponible, le signal relatif à l'indisponibilité du rapport de transmission demandé est nul. Dans ce cas le sixième module de rapport 30 délivre un signal en sortie au module d'application 14 indiquant que le rapport de transmission à appliquer est le rapport de transmission demandé.

Le module d'application 14 délivre alors en sortie les informations relatives au rapport de transmission à appliquer, et les conditions d'applications s'il y en a, comme dans le cas de l'application du premier rapport montant disponible avec glissement.

## Revendications

1. Procédé de commande des rapports de transmission et de l'embrayage d'un véhicule automobile équipé d'une boîte de vitesse automatique, comprenant une réception (101) d'une consigne de rapport de transmission demandé, une réception (102) d'informations relatives aux rapports de transmission indisponibles, une détermination du rapport de transmission à appliquer tenant compte des rapports de transmission indisponibles, un premier calcul (106) du premier rapport montant disponible, un second calcul (107) du premier rapport rétrograde disponible, le rapport de transmission à appliquer correspondant au premier rapport montant disponible si aucun rapport rétrograde n'est disponible, **caractérisé en ce que** l'embrayage réalise un glissement lors de l'application du premier rapport montant disponible si la vitesse prévisionnelle de l'arbre primaire correspondant au premier rapport montant disponible (Nₘₒₙₜₐₙₜ) est inférieure à un seuil de vitesse de ralenti (Vᵣₐₗₑₙₜᵢ).

2. Procédé selon la revendication 1, **caractérisé en ce qu'**il comprend une vérification (103) de la disponibilité du rapport de transmission demandé, le rapport de transmission à appliquer correspondant à la consigne de rapport de transmission demandé si le rapport de transmission demandé est disponible.

3. Procédé selon l'une des revendications 1 ou 2, dans lequel le rapport de transmission à appliquer correspond au premier rapport rétrograde si, d'une part, il existe un rapport rétrograde disponible et si, d'autre part, le régime de l'arbre primaire prévisionnel correspondant au premier rapport rétrograde (N_{rétro}) est inférieur à un seuil de forçage de rapport montant (Surrégime).

4. Procédé selon la revendication 3, dans lequel le rapport de transmission à appliquer correspond au premier rapport montant si le régime de l'arbre primaire prévisionnel correspondant au premier rapport rétrograde (N_{rétro}) est supérieur à un seuil de forçage de rapport montant (Surrégime), et si un rapport montant est disponible et que le régime prévisionnel du premier rapport montant disponible (Nₘₒₙₜₐₙₜ) est supérieur à un seuil d'autorisation de passage au rapport montant (Sousrégime).

5. Procédé selon la revendication 4, dans lequel, si le régime prévisionnel du premier rapport montant disponible (Nₘₒₙₜₐₙₜ) est inférieur à un seuil d'autorisation de passage au rapport montant (Sousrégime), ou bien si aucun rapport montant n'est disponible, le rapport de transmission à appliquer correspond au premier rapport rétrograde si le régime prévisionnel du premier rapport rétrograde (N_{rétro}) est inférieur à un régime statique acceptable (V_{statique}) correspondant au régime maximal que peut supporter l'arbre primaire.

6. Procédé selon la revendication 5, dans lequel le rapport de transmission à appliquer correspond au premier rapport rétrograde si le régime prévisionnel du premier rapport rétrograde (N_{rétro}) est supérieur au régime statique acceptable (V_{statique}) et que le rapport de transmission appliqué avant la consigne de rapport de transmission demandé correspond au premier rapport rétrograde disponible.

7. Procédé selon la revendication 6, dans lequel le rapport de transmission à appliquer est nul, ce qui correspond à une demande de débrayage, si le rapport de transmission demandé n'est pas disponible et si aucun rapport montant ou rétrograde n'est disponible.

8. Procédé selon la revendication 7, dans lequel le basculement du premier rapport montant disponible au premier rapport rétrograde disponible est autorisé seulement si la vitesse du véhicule est inférieure à un seuil de vitesse du véhicule et que l'accélérateur est relevé, le rapport de transmission à appliquer étant nul si les moyens mesure de la vitesse du véhicule sont en défaut sauf si le mode manuel est enclenché et qu'il y a un rapport de transmission engagé, dans lequel cas le rapport de transmission à appliquer correspond au rapport de transmission demandé.

9. Système de commande des rapports de transmission et de l'embrayage d'un véhicule automobile équipé d'une boîte de vitesse automatique, comprenant un premier module de réception (1) aptes à recevoir une consigne de rapport de transmission demandé, un second module de réception (2) aptes- à recevoir des informations relatives aux rapports de transmission indisponibles, des moyens de détermination (6) du rapport de transmission à appliquer aptes à calculer le rapport de transmission à appliquer en fonction des rapports de transmission indisponibles, des premiers moyens de calculs (4) aptes à calculer le premier rapport montant disponible, et des seconds moyens de calculs (5) aptes à calculer le premier rapport rétrograde disponible, les moyens de détermination (6) du rapport de transmission à appliquer comprenant un premier module de comparaison (11) apte à comparer le régime de l'arbre primaire prévisionnel correspondant au premier rapport rétrograde (N_{rétro}) à un seuil de forçage de rapport montant (Surrégime), un second module de comparaison (15) apte à comparer le régime prévisionnel du premier rapport montant disponible (Nₘₒₙₜₐₙₜ) à un seuil d'autorisation de passage au rapport montant (Sousrégime), **caractérisé en ce que** le système comprend de plus un troisième module de comparaison (18) apte à comparer le régime prévisionnel du premier rapport rétrograde (N_{rétro}) à un régime statique acceptable (V_{statique}) correspondant au régime maximal que peut supporter l'arbre primaire, un quatrième module de comparaison (27) apte à comparer le régime prévisionnel du premier rapport montant disponible à un seuil de vitesse ralenti du premier rapport montant disponible (Nmontant) à un seuil de vitesse ralenti (Vᵣₐₗₑₙₜᵢ), le système de commande comprenant en outre un embrayage apte à réaliser un glissement lors de l'application du premier raapport montant disponible si la vitesse prévisionnelle de l'arbre primaire correspondant au premier rapport montant disponible (Nₘₒₙₜₐₙₜ) est inférieure audit un seuil de vitesse de ralenti (Vᵣₐₗₑₙₜᵢ).

10. Système selon la revendication 9, **caractérisé en ce qu'**il comprend des moyens de traitement (3) aptes à vérifier la disponibilité du rapport de transmission demandé et à déterminer l'ensemble des rapports indisponibles.

## Patentansprüche

1. Verfahren zur Steuerung der Getriebeübersetzungen und der Kupplung eines Kraftfahrzeugs, das mit einem Automatikgetriebe ausgestattet ist, umfassend einen Empfang (101) eines angeforderten Sollwerts für die Getriebeübersetzung, einen Empfang (102) von Informationen bezüglich unverfügbaren Getriebeübersetzungen, eine Bestimmung der anzuwendenden Getriebeübersetzung unter Berücksichtigung der unverfügbaren Getriebeübersetzungen, eine erste Berechnung (106) der ersten verfügbaren Hochschaltung, eine zweite Berechnung (107) der ersten verfügbaren Herunterschaltung, wobei die anzuwendende Getriebeübersetzung dann der ersten verfügbaren Hochschaltung entspricht, wenn keine Herunterschaltung zur Verfügung steht, **dadurch gekennzeichnet, dass** die Kupplung bei der Anwendung der ersten verfügbaren Hochschaltung eine Gleitbewegung ausführt, wenn die voraussichtliche Drehzahl der Hauptwelle, die der ersten verfügbaren Hochschaltung (N_{Hoch}) entspricht, unter einem Schwellenwert für die Leerlaufdrehzahl (V_{Leerlauf}) liegt.

2. Verfahren nach Anspruch 1, **dadurch gekennzeichnet, dass** es eine Überprüfung (103) der Verfügbarkeit der angeforderten Getriebeübersetzung umfasst, wobei die anzuwendende Getriebeübersetzung dem angeforderten Sollwert für die Getriebeübersetzung dann entspricht, wenn die angeforderte Getriebeübersetzung zur Verfügung steht.

3. Verfahren nach einem der Ansprüche 1 oder 2, wobei die anzuwendende Getriebeübersetzung der ersten Herunterschaltung entspricht, wenn zum einen eine Herunterschaltung zur Verfügung steht und zum anderen die voraussichtliche Drehzahl der Hauptwelle, die der ersten Herunterschaltung (N_{Herunter}) entspricht, unter einem Schwellenwert zum Erzwingen der Hochschaltung (Überdrehzahl) liegt.

4. Verfahren nach Anspruch 3, wobei die anzuwendende Getriebeübersetzung der ersten Hochschaltung entspricht, wenn die voraussichtliche Drehzahl der Hauptwelle, die der ersten Herunterschaltung (N_{Herunter}) entspricht, über einem Schwellenwert zum Erzwingen einer Hochschaltung (Überdrehzahl) liegt und wenn eine Hochschaltung zur Verfügung steht und die vorläufige Drehzahl der ersten Hochschaltung (N_{Hoch}) über einem Schwellenwert zur Genehmigung des Umschaltens auf die Hochschaltung (Unterdrehzahl) liegt.

5. Verfahren nach Anspruch 4, wobei, wenn die voraussichtliche Drehzahl der ersten verfügbaren Hochschaltung (N_{Hoch}) unter einem Schwellenwert zur Genehmigung des Umschaltens auf die Hochschaltung (Unterdrehzahl) liegt oder keine Hochschaltung zur Verfügung steht, die anzuwendende Getriebeübersetzung der ersten Herunterschaltung entspricht, wenn die voraussichtliche Drehzahl der ersten Herunterschaltung (N_{Herunter}) unter einer zulässigen statischen Drehzahl (V_{statisch}) liegt, die der höchsten Drehzahl entspricht, die die Hauptwelle unterstützen kann.

6. Verfahren nach Anspruch 5, wobei die anzuwendende Getriebeübersetzung der ersten Herunterschaltung entspricht, wenn die vorläufige Drehzahl der ersten verfügbaren Herunterschaltung (N_{Herunter}) über der zulässigen statischen Drehzahl (V_{statisch}) liegt und die vor dem angeforderten Sollwert für die Getriebeübersetzung angewandte Getriebeübersetzung der ersten verfügbaren Herunterschaltung entspricht.

7. Verfahren nach Anspruch 6, wobei die anzuwendende Getriebeübersetzung Null ist, was einer Anforderung zum Auskuppeln entspricht, wenn die angeforderte Getriebeübersetzung nicht zur Verfügung steht und keine Hoch- oder Herunterschaltung zur Verfügung steht.

8. Verfahren nach Anspruch 7, wobei das Umschalten von der ersten verfügbaren Hochschaltung auf die erste verfügbare Herunterschaltung nur dann genehmigt wird, wenn die Fahrzeuggeschwindigkeit unter einem Schwellenwert für die Fahrzeuggeschwindigkeit liegt und das Gaspedal nicht betätigt wird, wobei die anzuwendende Getriebeübersetzung Null ist, wenn die Mittel zum Messen der Fahrzeuggeschwindigkeit Fehler aufweisen, es sei denn, die manuelle Betriebsart wurde ausgelöst und eine Getriebeübersetzung wurde eingelegt, wobei in diesem Fall die anzuwendende Getriebeübersetzung der angeforderten Getriebeübersetzung entspricht.

9. System zur Steuerung der Getriebeübersetzungen und der Kupplung eines mit einem Automatikgetriebe ausgestatteten Kraftfahrzeugs, umfassend ein erstes Empfangsmodul (1), das dazu geeignet ist, einen angeforderten Sollwert für die Getriebeübersetzung zu empfangen und ein zweites Empfangsmodul (2), das dazu geeignet ist, Informationen bezüglich unverfügbaren Getriebeübersetzungen zu empfangen, Mittel zur Bestimmung (6) der anzuwendenden Getriebeübersetzung die dazu geeignet sind, die anzuwendende Getriebeübersetzung in Abhängigkeit der unverfügbaren Getriebeübersetzungen zu berechnen, erste Berechnungsmittel (4), die dazu geeignet sind, die erste verfügbare Hochschaltung zu berechnen und zweite Berechnungsmittel (5), die dazu geeignet sind, die erste verfügbare Herunterschaltung zu berechnen, wobei die Mittel zur Bestimmung (6) der anzuwendenden Getriebeübersetzung ein erstes Vergleichsmodul (11) umfassen, das dazu geeignet ist, die voraussichtliche Drehzahl der Hauptwelle, die der ersten Herunterschaltung (N_{Herunter}) entspricht, mit einem Schwellenwert zum Erzwingen der Hochschaltung (Überdrehzahl) zu vergleichen und ein zweites Vergleichsmodul (15), das dazu geeignet ist, die voraussichtliche Drehzahl der ersten verfügbaren Hochschaltung (N_{Hoch}) mit einem Schwellenwert zur Genehmigung des Umschaltens in die Hochschaltung (Unterdrehzahl) zu vergleichen, **dadurch gekennzeichnet, dass** das System zudem ein drittes Vergleichsmodul (18) umfasst, das dazu geeignet ist, die vorläufige Drehzahl der ersten Herunterschaltung (N_{Herunter}) mit einer zulässigen statischen Drehzahl (V_{statisch}) zu vergleichen, die der höchsten Drehzahl entspricht, die die Hauptwelle unterstützen kann, ein viertes Vergleichsmodul (27), das dazu geeignet ist, die voraussichtliche Drehzahl der ersten verfügbaren Hochschaltung (N_{Hoch}) mit einem Schwellenwert für die Leerlaufdrehzahl (V_{Leerlauf}) zu vergleichen, wobei das Steuerungssystem weiterhin eine Kupplung umfasst, die dazu geeignet ist, bei der Anwendung der ersten verfügbaren Hochschaltung eine Gleitbewegung auszuführen, wenn die vorläufige Drehzahl der Hauptwelle, die der ersten verfügbaren Hochschaltung entspricht (N_{Hoch}), unter dem Schwellenwert für die Leerlaufgeschwindigkeit (V_{Leerlauf}) liegt.

10. System nach Anspruch 9, **dadurch gekennzeichnet, dass** es Verarbeitungsmittel (3) umfasst, die dazu geeignet sind, die Verfügbarkeit der angeforderten Getriebeübersetzung zu überprüfen und alle unverfügbaren Getriebeübersetzungen zu ermitteln.

## Claims

1. Method for controlling transmission ratios and the clutch of a motor vehicle equipped with an automatic gearbox, comprising a reception (101) of a requested transmission ratio set point,
a reception (102) of information relating to the unavailable transmission ratios, a determination of the transmission ratio to be applied taking into account the unavailable transmission ratios, a first computation (106) of the first available upshift, a second computation (107) of the first available downshift, the transmission ratio to be applied corresponding to the first available upshift if no downshift is available, **characterized in that** the clutch produces a slip upon the application of the first available upshift if the forecast speed of the primary shaft corresponding to the first available upshift (Nᵤₚ) is below an idle speed threshold (V_{idle}).

2. Method according to Claim 1, **characterized in that** it comprises a verification (103) of the availability of the requested transmission ratio, the transmission ratio to be applied corresponding to the requested transmission ratio set point if the requested transmission ratio is available.

3. Method according to either of Claims 1 and 2, wherein the transmission ratio to be applied corresponds to the first downshift if, on the one hand, there is a downshift available and if, on the other hand, the forecast speed of the primary shaft corresponding to the first downshift (N_{down}) is below an upshift forcing threshold (overspeed).

4. Method according to Claim 3, wherein the transmission ratio to be applied corresponds to the first upshift if the forecast speed of the primary shaft corresponding to the first downshift (N_{down}) is above an upshift forcing threshold (overspeed), and if an upshift is available and the forecast speed of the first available upshift (Nᵤₚ) is above a threshold authorizing the upshift transition (underspeed).

5. Method according to Claim 4, wherein, if the forecast speed of the first available upshift (Nᵤₚ) is below a threshold authorizing the upshift transition (underspeed), or else if no upshift is available, the transmission ratio to be applied corresponds to the first downshift if the forecast speed of the first downshift (N_{down}) is below an acceptable steady-state speed (V_{steady-state}) corresponding to the maximum speed that the primary shaft can support.

6. Method according to Claim 5, wherein the transmission ratio to be applied corresponds to the first downshift if the forecast speed of the first downshift (N_{down}) is above the acceptable steady-state speed (V_{steady-state}) and the transmission ratio applied before the requested transmission ratio set point corresponds to the first available downshift.

7. Method according to Claim 6, wherein the transmission ratio to be applied is nil, which corresponds to a declutch request, if the requested transmission ratio is not available and if no upshift or downshift is available.

8. Method according to Claim 7, wherein the switchover from the first available upshift to the first available downshift is authorized only if the speed of the vehicle is below a vehicle speed threshold and the accelerator is raised, the transmission ratio to be applied being nil if the vehicle speed measurement means are faulty unless the manual mode is engaged and there is an engaged transmission ratio, in which case the transmission ratio to be applied corresponds to the requested transmission ratio.

9. System for controlling transmission ratios and the clutch of a motor vehicle equipped with an automatic gearbox, comprising a first reception module (1) capable of receiving a requested transmission ratio set point, a second reception module (2) capable of receiving information relating to the unavailable transmission ratios, means (6) for determining the transmission ratio to be applied capable of computing the transmission ratio to be applied as a function of the unavailable transmission ratios, first computation means (4) capable of computing the first available upshift, and second computation means (5) capable of computing the first available downshift,
the means (6) for determining the transmission ratio to be applied comprising a first comparison module (11) capable of comparing the forecast speed of the primary shaft corresponding to the first downshift (N_{down}) to an upshift forcing threshold (overspeed), a second comparison module (15) capable of comparing the forecast speed of the first available upshift (Nᵤₚ) to a threshold authorizing the upshift transition (underspeed), **characterized in that** the system also comprises a third comparison module (18) capable of comparing the forecast speed of the first downshift (N_{down}) to an acceptable steady-state speed (V_{steady-state}) corresponding to the maximum speed that the primary shaft can support, a fourth comparison module (27) capable of comparing the forecast speed of the first available upshift (Nᵤₚ) to an idle speed threshold (V_{idle}), the control system also comprising a clutch capable of producing a slip upon the application of the first available upshift if the forecast speed of the primary shaft corresponding to the first available upshift (Nᵤₚ) is below said one idle speed threshold (V_{idle}).

10. System according to Claim 9, **characterized in that** it comprises processing means (3) capable of verifying the availability of the requested transmission ratio and of determining all of the unavailable ratios.
